# EUROPÄISCHE PATENTSCHRIFT

(11) **EP 3 260 411 B1**
(45) Veröffentlichungstag und Bekanntmachung des Hinweises auf die Patenterteilung: **10.08.2022**
(21) Anmeldenummer: 17177385.6
(22) Anmeldetag: 22.06.2017
(51) Int. Cl.: B66F 9/075

(54) **FLURFÖRDERZEUG MIT MITTELN ZUR UNTERDRÜCKUNG BZW. REDUZIERUNG VON SCHWINGUNGEN**
INDUSTRIAL TRUCK COMPRISING MEANS FOR SUPPRESSING AND REDUCING VIBRATIONS
CHARIOT DE MANUTENTION COMPORTANT DES MOYENS DE COMPENSATION OU DE RÉDUCTION DES VIBRATIONS

(30) Priorität: 24.06.2016 DE 102016211390
(43) Veröffentlichungstag der Anmeldung: 27.12.2017
(73) Patentinhaber: Jungheinrich Aktiengesellschaft, 22047 Hamburg (DE)
(72) Erfinder: Magens, Ernst-Peter, 22949 Ammersbek (DE); Schmalzl, Jürgen, 85778 Haimhausen (DE); Bibernell, Hubert, 84034 Landshut (DE); Schöttke, Carsten, 85368 Moosburg (DE)
(74) Vertreter: Weickmann & Weickmann PartmbB

(56) Entgegenhaltungen:
- DE-T2-602004 001 979
- JP-A- 2004 277 068
- JP-A- 2006 160 406
- JP-U- H04 130 294

## Beschreibung

Die Erfindung betrifft ein Flurförderzeug mit einem Chassis, welches über wenigstens zwei Vorderräder - und über wenigstens ein Hinterrad am Boden abgestützt ist, einem Hubgerüst für eine Lasttragvorrichtung, welches in einem Hubgerüststützbereich des Chassis in aufrechter Position daran angeordnet ist, wobei die Vorderräder an Radarmen, drehbar angeordnet sind, die von dem Hubgerüststützbereich des Chassis nach vorne abstehen, und mit Mitteln zur Unterdrückung bzw. Reduzierung von Schwingungen.

Flurförderzeuge nach der Erfindung können z.B. Gabelstapler diverser Bauarten sein, wobei die Erfindung mit besonderen Vorzügen Anwendung finden kann bei Staplerfahrzeugen mit hoch verlagerbarem Schwerpunkt, z.B. bei Hochregalstaplerfahrzeugen, insbesondere bei Kommissionier - Dreiseitenstaplern, bei welchen Lasttraggabelzinken für Seitenschuboperationen quer zur Geradeausfahrtrichtung des Flurförderzeugs orientiert bzw. ausrichtbar sind. Mit solchen Hochregalstaplerfahrzeugen lässt sich das Ein- und Ausstapeln ganzer Paletten und das Kommissionieren einzelner Artikel aus dem Hochregal mühelos verbinden. Hochregalstaplerfahrzeuge der hier betrachteten Art umfassen solche, bei denen ein Fahrerplatz an dem Hubgerüst auf- und abwärts bewegbar mittels eines Fahrerplatzträgers angeordnet ist, wobei an dem Fahrerplatz in dessen Front ein Seitenschubrahmen vorgesehen ist, der zusammen mit dem Fahrerplatz an dem Hubgerüst auf- und abwärts bewegbar ist und eine seitlich quer zur Geradeausfahrtrichtung des Flurförderzeugs hin- und her bewegbare Lasttragvorrichtung trägt. Da der Fahrerplatz mit einer sich darauf befindenden Bedienungsperson zusammen mit der Lasttragvorrichtung vertikal am Hubgerüst verfahrbar ist, bezeichnet man derartige Flurförderzeuge auch als man-up-Fahrzeuge oder man-up-Flurförderzeuge, Bei verschiedenen Bautypen von man-up-Flurförderzeugen ist das Hubgerüst teleskopisch ausfahrbar und einziehbar, wobei der Fahrerplatz an der am höchsten ausfahrbaren Teleskopstufe des Hubgerüstes höhenverstellbar befestigt ist. Die an dem Seitenschubrahmen bewegbar geführte Lasttragvorrichtung kann ein Zusatzhubgerüst mit daran relativ zum Fahrerplatz auf- und abwärts bewegbaren Lastaufnahmemitteln umfassen, bei denen es sich üblicherweise um Lasttragzinken bzw. um eine Lasttraggabel mit solchen Lasttragzinken handelt. Das Zusatzhubgerüst ist an einem Schwenkschubgerät angeordnet und daran um eine üblicherweise vertikale Achse um ca. 180° schwenkbar, so dass die an dem Zusatzhubgerüst höhenverstellbar befestigte Lasttraggabel aus einer Stellung mit Ausrichtung seitlich quer zur Geradeausfahrtrichtung des Flurförderzeugs in eine Stellung mit entgegengesetzter seitlicher Ausrichtung verschwenkt werden kann. Das Schwenkschubgerät ist an dem Seitenschubrahmen linear geführt.

Eine typische Aufgabe für das Flurförderzeug besteht zum Beispiel darin, eine Palette mit darauf befindlicher Last in ein Regal einzulagern, wobei sich das Flurförderzeug in einem Schmalgang zwischen Regalen eines Hochregallagers befindet und die Palette auf der Lasttraggabel aufgenommen ist. Das Einschieben der Palette in das Regal erfolgt seitlich quer zur Geradeausfahrtrichtung (normale Hauptfahrtrichtung) des Flurförderzeugs, wobei vorausgesetzt sei, dass die Lasttraggabel bereits seitlich zu dem Regal hin korrekt auf den gewünschten Lagerplatz ausgerichtet ist und sich das Schwenkschubgerät mit dem daran vorgesehenen Zusatzhubgerüst in einer seitlichen Endstellung an dem vom betreffenden Regal entfernten Ende des Seitenschubrahmens befindet. Durch lineares seitliches Verschieben des Schwenkschubgerätes entlang des Seitenschubrahmens kann dann die beladene Palette in das Regal eingeführt werden.

Es ist ein bekanntes Problem, dass bei Flurförderzeugen der hier betrachteten Art Schwingungen am Hubgerüst, insbesondere Schwingungen mit seitlichen, d.h. quer zur Geradeausfahrtrichtung des Flurförderzeuges gerichteten Schwingungskomponenten auftreten können, insbesondere bei Fahrt auf unebenem Fahruntergrund. Solche Schwingungen sind oft umso heftiger je höher der Fahrerplatz und seine Vorbaugeräte am Hubgerüst angehoben sind und je größer die mittels der Lasttragvorrichtung ggf. aufgenommene Last ist. Solche Schwingungsbewegungen können für eine auf dem Fahrerplatz befindliche Bedienungsperson unangenehm sein und machen die schnelle Fahrt im Schmalgang sowie das Einlagern und Auslagern von Paletten in- und aus Regalen schwierig oder gar zeitweise unmöglich, so dass die Bedienungsperson einen Einlagerungs- oder Auslagerungsvorgang erst dann sicher einleiten kann, wenn die Schwingungen bei stehendem Flurförderzeug abgeklungen sind. Alternativ könnte die Bedienungsperson das Flurförderzeug bei Fahrt auf unebenem Boden grundsätzlich mit reduzierter Geschwindigkeit fahren, um Schwingungsanregungen weitestgehend zu vermeiden. Beides würde jedoch die Produktivität bei der Arbeit mit dem Flurförderzeug senken.

Aus der EP 2 368 832 B1 ist ein als man-up-Fahrzeug ausgebildetes Flurförderzeug der eingangs genannten Art bekannt, bei dem bereits Maßnahmen zur Schwingungsreduzierung getroffen wurden. Diese Maßnahmen bestehen darin, dass eine als Lastaufnahmeabschnitt bezeichnete, am Hubgerüst auf- und ab bewegbare, den Fahrerplatz und die damit verbundene Lasttragvorrichtung zusammenhängend umfassende Baugruppe so an dem Hubgerüst angebracht ist, dass sie insgesamt quer zur Geradeausfahrtrichtung (Hauptfahrtrichtung) des Flurförderzeugs Bewegungen mit einer seitlichen, d.h. normalerweise horizontalen Bewegungskomponente relativ zu dem Hubgerüst ausführen kann, wobei hierzu ein gesonderter, nicht für den planmäßigen Betrieb des Flurförderzeugs vorgesehener Bewegungsfreiheitsgrad für die Baugruppe eingerichtet ist. Das bekannte Flurförderzeug weist Mittel zum Dämpfen oder Vermeiden von Schwingungen in der relativen Lage zwischen dem Lastaufnahmeabschnitt und dem Hubgerüst, d.h. zwischen dem Fahrerplatz und dem Hubgerüst, auf. Dabei kann es sich um aktive und/oder passive Schwingungsdämpfungsmittel handeln, die geeignet sind, eine Kraft oder ein-Moment zwischen dem Hubgerüst und dem Lastaufnahmeabschnitt zu erzeugen, die bzw. das eine Komponente entlang des gesonderten, nicht für den planmäßigen Betrieb des Flurförderzeugs vorgesehenen Bewegungsfreiheitsgrad hat. In der EP 2 368 832 B1 sind zur Schwingungsreduzierung u.a. Dämpfungselemente einschließlich Federn vorgeschlagen, die einer Auslenkung des Hubgerüstes und der als Lastaufnahmeabschnitt bezeichneten Baugruppe entlang des gesonderten Bewegungsfreiheitsgrades entgegenwirken. Nachteilig an dieser bekannten Lösung ist ein relativ großer Montageaufwand, um die komplette Baugruppe aus Fahrerplatz und allen gemeinsam damit am Hubgerüst vertikal verfahrbaren Lastaufnahmekomponenten unter Einrichtung des gesonderten, nicht für den planmäßigen Betrieb des Flurförderzeugs vorgesehenen Bewegungsfreiheitsgrades an dem Hubgerüst anzubringen.

Gattungsgemäße Flurförderzeuge sind ferner aus der JP 2006 160 406 A und der JP 2004 277 068 A bekannt, wobei der Vollständigkeit halber ferner auf die DE 60 2004 001 979 T2 verwiesen sein soll.

Der Erfindung liegt die Aufgabe zu Grunde, ein Flurförderzeug der eingangs genannten Art bereitzustellen, welches außerhalb des Bereichs des Hubgerüstes mit montagetechnisch relativ einfach zu realisierenden schwingungsunterdrückenden oder schwingungsreduzierenden Maßnahmen ausgestattet ist, die einen effizient schwingungsreduzierten Betrieb ermöglichen.

Erfindungsgemäß wird ein Flurförderzeug mit den Merkmalen des Patentanspruchs 1 vorgeschlagen, nämlich ein Flurförderzeug mit einem Chassis, welches über wenigstens zwei Vorderräder- und über wenigstens ein Hinterrad am Boden abgestützt ist, einem Hubgerüst für eine Lasttragvorrichtung, welches in einem Hubgerüststützbereich des Chassis in aufrechter Position daran angeordnet ist, wobei die Vorderräder an Radarmen drehbar angeordnet sind, die von dem Hubgerüststützbereich des Chassis nach vorne abstehen, und mit Mitteln zur Unterdrückung bzw. Reduzierung von Schwingungen, wobei wenigstens einer der Radarme, vorzugsweise beide Radarme, eine Teilung in wenigstens zwei Radarmabschnitte aufweist bzw. aufweisen, die mittels einer Lageanordnung in der Weise gelagert sind, dass sie Bewegungen relativ zueinander ausführen können, wobei die Mittel zur Unterdrückung bzw. Reduzierung von Schwingungen dazu eingerichtet oder betreibbar sind, Relativbewegungen der Radarmabschnitte zu beeinflussen, um zu erreichen, dass etwaige Stöße aufgrund von Fahrbahnunebenheiten während der Fahrt nur reduziert bzw. abgefedert und gedämpft über die Radarme an das Chassis und das Hubgerüst weitergegeben werden können und dass etwaige Hubgerüstschwingungen gedämpft werden.

Eine Grundüberlegung der Erfindung besteht darin, in dem betreffenden Radarm, vorzugsweise in beiden Radarmen, eine jeweilige Bewegungsschnittstelle zwischen einem dem Hubgerüststützbereich des Chassis ferneren, das betreffende Vorderrad aufweisenden Radarmabschnitt und einem den Hubgerüststützbereich des Chassis näheren oder diesen umfassenden Radarmabschnitt vorzusehen. Dabei bietet sich zur Umsetzung dieser Grundüberlegung die Teilung des jeweiligen Radarmes in einen vorderen Radarmabschnitt und in einen hinteren Radarmabschnitt an.

Die Lageranordnung, welche die beiden Radarmabschnitte relativ zueinander beweglich lagert, kann ein Drehlager umfassen, welches in einem begrenzten Bereich eine Schwenkbewegung der beiden Radarmabschnitte eines Radarmes relativ zueinander um eine normalerweise horizontale und quer zur Hauptfahrtrichtung des Flurförderzeugs verlaufende Schwenkachse ermöglicht.

Eine solcher Schwenkbewegungsfreiheitsgrad hat bei Ausführungsformen der Erfindung auch eine Vertikalbewegungskomponente und ist nutzbar, um zu verhindern, dass Stöße und schnelle, spontane Vertikalbewegungen der Vorderräder bei Fahrt auf unebenem Fahrbahnboden ungehindert auf das Chassis und damit auf das Hubgerüst übertragen werden. In diesem Sinne kann die Anregung von Fahrzeugschwingungen, insbesondere Hubgerüstschwingungen bereits ursächlich in einem nennenswerten Maße wirksam unterbunden werden.

Kommt es dennoch zu Hubgerüstschwingungen, etwa beim seitlichen Ein- oder Ausstapeln von Lasten in großer Höhe, so ist der Schwenkbewegungsfreiheitsgrad der Radarmabschnitte in Verbindung mit den Mitteln zur Unterdrückung bzw. Reduzierung von Schwingungen insbesondere auch in der Weise nützlich, dass Querneigungstendenzen des Hubgerüstes bei Hubgerüstquerschwingungen und die dabei auftretenden momentanen Gewichtsverlagerungen (d.h. wechselnd ungleiche Belastungen des linken Radarmes und des rechten Radarmes durch das quer schwingende Hubgerüst) durch die Schwenkbewegungen der Radarmabschnitte relativ zueinander aufgenommen werden können, um Bewegungsenergie der Schwingung unter Einsatz der Mittel zur Unterdrückung bzw. Reduzierung von Schwingungen abzubauen.

Bei der bei Abfederung und Dämpfung von Stößen bei Fahrt auf unebenem Boden einerseits und bei der in Reaktion auf etwaige Hubgerüstschwingungen andererseits auftretenden Bewegung der Radarmabschnitte relativ zueinander wird durch Beeinflussung der Bewegung durch die Mittel zur Unterdrückung bzw. Reduzierung von Schwingungen Bewegungsenergie in eine andere Energieform, insbesondere Wärme, umgewandelt, um den Hubgerüstschwingungen entgegenzuwirken.

Gemäß einer weiteren Ausführungsform der Erfindung umfasst die Lageranordnung ein Linearlager, welches eine lineare Bewegung der beiden Radarmabschnitte eines Radarmes mit einer vertikalen Bewegungskomponente relativ zueinander ermöglicht.

Auf die Vorderräder des Flurförderzeugs wirkende Stöße aufgrund von Fahrbahnunebenheiten einerseits und etwaige durch seitliche Ein- oder Ausstapelungsvorgänge beispielsweise ausgelöste Hubgerüstschwingungen andererseits werden bei einer erfindungsgemäßen Ausgestaltung des Flurförderzeugs nicht über eine starre Kopplung zwischen den Vorderrädern und dem Chassis unmittelbar übertragen, sondern über eine durch die Bewegungsschnittstelle ermöglichte nicht-starre und in diesem Sinne "weiche" Kopplung durch die Mittel zur Unterdrückung bzw. Reduzierung von Schwingungen abgefedert und gedämpft.

Die Mittel zur Unterdrückung bzw. Reduzierung von Schwingungen umfassen ein die Bewegung der Radarmabschnitte relativ zueinander 5 beeinflussendes aktives Dämpfungssystem.

Gemäß einer Ausführungsform der Erfindung umfassen die Mittel zur Reduzierung von Schwingungen ein passives Dämpfungssystem.

Dies kann in einem sehr einfachen Fall ein Reibungsdämpfungssystem mit einer Reibungsdämpfungsanordnung sein, welche eine bremsende Wirkung auf die Bewegung der Radarmabschnitte relativ zueinander hat.

Reibungsdämpfungsanordnungen sind in diversen Ausführungsformen realisierbar, etwa indem eine erhöhte Lagerreibung in der die beiden Radarmabschnitte bewegbar lagernden Lageranordnung vorgesehen wird.

Der Bereich der Bewegung der Radarmabschnitte relativ zueinander ist z.B. durch Endanschläge begrenzt.

Es können passive oder/und aktiv betreibbare Rückstellmittel vorgesehen sein, die dazu dienen, die beiden Radarmabschnitte in eine gemeinsame Soll-Nullposition zurück zu bewegen, falls sie außerhalb dieser Soll-Nullposition am Ende eines Schwingungsreduzierungsvorgangs relativ zueinander zur Ruhe kommen sollten.

Gemäß einer Ausführungsform der Erfindung umfasst das Dämpfungssystem wenigstens einen hydraulischen oder/und pneumatischen Reibungsdämpfungszylinder. Ein solcher Reibungsdämpfungszylinder mit zwei durch einen axial darin verschiebbaren Kolben separierten Zylinderkammern kann hydraulisch z.B. so beschaltet sein, dass die beiden Zylinderkammern über eine hydraulische Drosselstelle kurzgeschlossen sind.

Ein solcher Reibungsdämpfungszylinder kann ferner z.B. mit einer hydropneumatischen Federspeicheranordnung kombiniert sein, welche einer Auslenkung des Kolbens des Reibungsdämpfungszylinders aus einer Nulllage heraus entgegenwirkt. Bei derartigen Ausführungsformen der Erfindung verbindet der betreffende Dämpfungszylinder vorzugsweise die beiden relativ zueinander bewegbaren Radarmabschnitte eines Radarmes unmittelbar miteinander. Dies ermöglicht eine relativ kompakte kurze Bauform des Dämpfungszylinders.

Es ist allgemein bei derartigen Dämpfungssystemen, insbesondere Reibungsdämpfungssystemen vorteilhaft, wenn sie wenigstens eine Federanordnung aufweisen. Diese kann im vorliegenden Fall beispielsweise dazu eingerichtet sein, bei einer Auslenkung der relativ zueinander bewegbaren Radarmabschnitte eines Radarmes aus einer gemeinsamen Soll-Nullposition die Radarmabschnitte zumindest tendenziell wieder zu der gemeinsamen Soll-Nullposition zurückzudrängen bzw. die Radarmabschnitte grundsätzlich zu der gemeinsamen Soll-Nullposition hin vorzuspannen.

Die Federanordnung kann z.B. wenigstens eine mechanische Feder oder/ und, wie oben schon erwähnt, wenigstens einen hydropneumatischen Federspeicher umfassen. Als mechanische Federn kommen bevorzugt Schraubenfedern und/oder Blattfedern zum Einsatz. Bevorzugt wirkt die Federanordnung unmittelbar zwischen den relativ zueinander bewegbaren Radarmabschnitten eines Radarmes.

Gemäß einer weiteren Ausführungsform der Erfindung umfasst die aktive Komponente, wenigstens einen steuerbaren hydraulischen oder/und pneumatischen Zylinder oder/und wenigstens einen steuerbaren Elektromotor, vorzugsweise Servomotor, oder/und wenigstens einen Elektromagneten, wobei die aktive Komponente des Dämpfungssystems bevorzugt dazu eingerichtet ist, unmittelbar zwischen den beiden relativ zueinander bewegbaren Radarmabschnitten eines Radarmes zu wirken, um diese in einer Hubgerüstschwingungen unterdrückenden bzw. reduzierenden Weise aktiv zu bewegen.

Eine Steuerungseinrichtung ist in einem aktiven System vorgesehen, um die aktive(n) Komponente(n) zu steuern. Ferner können Sensoren vorgesehen sein, die Schwingungsamplituden des Hubgerüstes oder/und daran höhenbeweglich angeordneter Komponenten erfassen, wobei die Steuerungseinrichtung Daten dieser Sensoren verarbeiten kann, um die aktive(n) Komponente(n) im Sinne einer optimierten Schwingungsreduzierung zu steuern. In diesem Sinne kann auch wenigstens ein Sensor vorgesehen sein, der die Relativbewegung der Radarmabschnitte relativ zueinander erfasst.

Die Mittel zur Unterdrückung bzw. Reduzierung von Schwingungen können gemäß einer Ausführungsform der Erfindung aktivierbar und deaktivierbar sein.

Hierzu kann beispielsweise eine steuerbare Verriegelungsvorrichtung vorgesehen sein, welche die beiden Radarmabschnitte eines Radarmes im deaktivierten Zustand der Mittel zur Unterdrückung bzw. Reduzierung von Schwingungen im Wesentlichen starr miteinander koppelt, und welche die Radarmabschnitte aus der starren Kopplung freigibt, wenn die Mittel zur Unterdrückung bzw. Reduzierung von Schwingungen aktiviert werden.

Bei einer besonders vorteilhaften Variante einer solchen Ausführungsform der Erfindung sind die Mittel zur Unterdrückung bzw. Reduzierung von Schwingungen in Abhängigkeit vom jeweiligen Betriebszustand des Flurförderzeugs oder/und in Abhängigkeit vom Aufenthalt des Flurförderzeugs in bestimmten Umgebungen, z. B. in einem Schmalgang, automatisch aktivierbar bzw. deaktivierbar. So kann die Steuerung der Mittel zur Unterdrückung bzw. Reduzierung von Schwingungen mittels einer Steuereinrichtung z.B. in Abhängigkeit von der Fahrbeschleunigung (auch Querbeschleunigung) oder/und Fahrgeschwindigkeit des Flurförderzeugs, von der jeweiligen Hubhöhe der Lasttragvorrichtung, von der Masse der vom Flurförderzeug aufgenommenen Last, von der Ausrichtung von Lasttraggabelzinken, von Stößen, etwa bei Fahrbahnunebenheiten, vom Aufenthaltsort bzw. von der Umgebung des Flurförderzeugs, etwa wenn sich dieses in einem Schmalgang eines Hochregallagers befindet, usw. erfolgen, wobei Sensoren oder sonstige Erfassungsmittel zur Erfassung dieser Parameter vorgesehen sind, die mit der die Mittel zur Unterdrückung bzw. Reduzierung von Schwingungen steuernden Steuereinrichtung des Flurförderzeugs zusammenwirken. So kann es beispielsweise vorgesehen sein, dass die Steuereinrichtung die "Starrheit bzw. Härte" der Kopplung zwischen den Radarmabschnitten in Abhängigkeit von einem oder mehreren der vorstehend genannten Parameter ändert. Je weniger Schwingungsreduzierungsbedarf gegeben ist, desto starrer bzw. härter kann diese Kopplung eingestellt werden.

Sollen die Mittel zur Unterdrückung bzw. Reduzierung von Schwingungen beispielsweise nur zur Unterdrückung bzw. Reduzierung von Querschwingungen wirksam werden, so kann es vorgesehen sein, dass sie in Abhängigkeit von der Ausrichtung von Lasttraggabelzinken oder/und in Abhängigkeit von der Hubhöhenstellung der Lasttraggabelzinken oder/und nur bei Aufenthalt des Flurförderzeugs im Schmalgang steuerbar sind, so dass sie beispielsweise im Schmalgang bei Querstellung der Lasttraggabelzinken relativ zur Geradeausfahrtrichtung des Flurförderzeugs wirksam sind.

Ausführungsbeispiele der Erfindung werden nachstehend unter Bezugnahme auf die Figuren erläutert.
- Figur 1: zeigt in einer Seitenansicht ein Ausführungsbeispiel eines Flurförderzeugs nach der Erfindung, welches als Dreiseiten-Hochregalstapler ausgebildet ist.
- Figur 2: zeigt in einer Seitenansicht das Grundfahrzeug des Ausführungsbeispiels aus Figur 1 ohne Hubgerüst, Fahrerplatz und Anbaugerät.
- Figur 3: zeigt in einer perspektivischen Teildarstellung das Chassis des Grundfahrzeugs aus Figur 2 mit zusätzlichen Rahmenteilen zur Hubgerüstbefestigung und zur Bildung eines Batteriefachs.
- Figur 4: zeigt in einer isolierten schematischen Teildarstellung eine Seitenansicht eines Radarmes des Ausführungsbeispiels gemäß den Figuren 1 bis 3 mit Mitteln zur Unterdrückung bzw. Reduzierung von Schwingungen, wobei der Radarm im Bereich eines Reibungszylinders teilweise ausgebrochen dargestellt ist.
- Figuren: 5 bis 6 zeigen in isolierten schematischen Teildarstellungen ähnlich denen der Figur 4 Seitenansichten von erfindungsgemäß in Radarmabschnitte geteilten Radarmen weiterer Ausführungsbeispiele der Erfindung mit unterschiedlichen Mitteln zur Unterdrückung bzw. Reduzierung von Schwingungen.

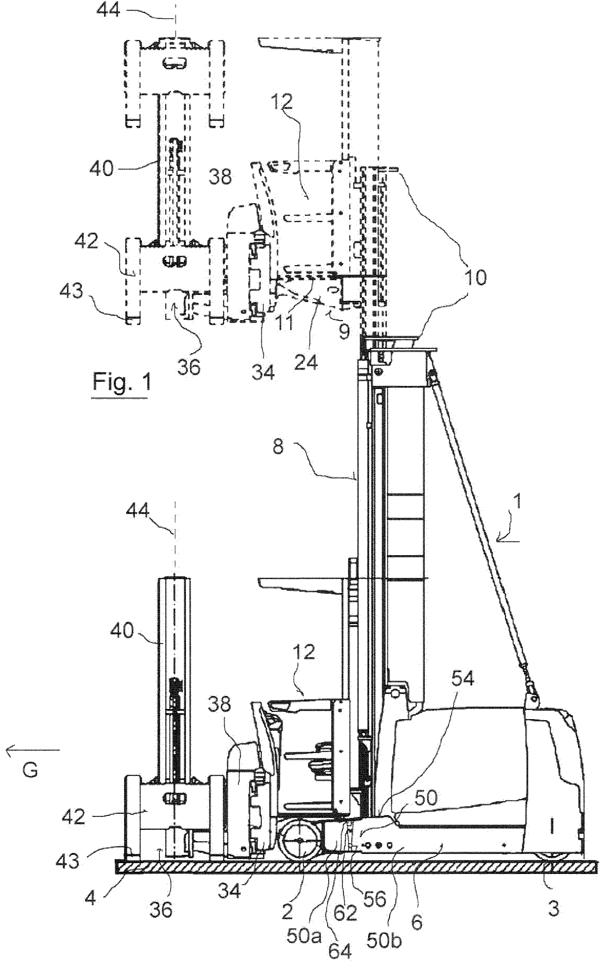

Das als Dreiseiten-Hochregalstapler ausgebildete Flurförderzeug 1 weist gemäß Figur 1 ein über zwei Vorderräder 2 und ein hinteres Antriebsrad 3 am Fahruntergrund 4 abgestütztes Chassis 6 und ein an dem Chassis 6 aufrecht stehend befestigtes Hubgerüst 8 auf. Das Hubgerüst 8 ist mehrteilig teleskopisch ausfahrbar, wie dies in Figur 1 anhand der mit gestrichelten Linien gezeigten Ausfahrstellung zu erkennen ist. An der am weitesten ausfahrbaren Teleskopstufe 10 des Hubgerüstes 8 ist eine Tragstruktur 9 als Fahrerplatzträger vertikal verfahrbar angebracht. Die Tragstruktur 9 weist eine vom Hubgerüst 8 in Hauptfahrtrichtung G des Flurförderzeugs nach vorn abstehende Kragträgeranordung 24 als Ausleger auf, die eine Plattform 11 eines Fahrerplatzes 12 an deren Unterseite abstützt und die und an ihrem abstehenden Ende einen Seitenschubrahmen 34 trägt.

Der Fahrerplatz 12 ist als hebbare Fahrerkabine ausgestaltet. In Front des Fahrerplatzes 12 ist an der Kragträgeranordung 24 der Seitenschubrahmen 34 befestigt.

Ein Seitenschubgerät 38 in der Bauform als Schwenkschubgerät ist als Anbaugerät seitlich quer zur Geradeausfahrtrichtung G des Flurförderzeugs verschiebbar an dem Seitenschubrahmen 34 angeordnet. Das Seitenschubgerät 38 ist mit einer Lasttragvorrichtung 36 verbunden, die ein vorne an dem Seitenschubgerät 38 angeordnetes Zusatzhubgerüst 40 aufweist, an welchem als Lastträgerelement eine Lasttraggabel 42 mit einer Gabelträgeranordnung vertikal verfahrbar ist. Das Zusatzhubgerüst 40 ist zusammen mit der Lasttraggabel 42 um die Hochachse 44 zwischen der in Fig.1 gezeigten Stellung mit seitlicher Ausrichtung der Lasttraggabel 42 bzw. deren Lasttragzinken 43 (Querausrichtung nach links in bezug auf die Geradeausfahrtrichtung G) und einer Stellung mit entgegengesetzter seitlicher Ausrichtung (Querausrichtung nach rechts) der Lasttragzinken 43 schwenkbar.

Besonderheit des Flurförderzeugs sind Mittel zur Unterdrückung bzw. Reduzierung von Schwingungen, welche insbesondere dazu eingerichtet sind, Schwingungen des Flurförderzeugs und insbesondere Hubgerüstschwingungen mit Horizontalauslenkungskomponenten quer zur Hauptfahrtrichtung G des Flurförderzeugs (Querschwingungen) zu unterdrücken bzw. zu dämpfen. Hubgerüstschwingungen und insbesondere auch derartige Querschwingungen können beispielsweise bei Fahrt des Flurförderzeugs 1 auf unebenem Fahruntergrund angeregt werden. Dabei kann es ohne Vorkehrungen zur zumindest tendenziellen Unterbindung von Schwingungsanregungen zu merklichen seitlichen Auslenkungen des Hubgerüstes 8 kommen, insbesondere, wenn es sich dabei um ein teleskopisch ausfahrbares Hubgerüst 8 handelt, welches gemäß der in Figur 1 mit gestrichelten Linien gezeigten Situation bei maximal eingestellter Hubhöhe der Lasttragvorrichtung 36 vollständig ausgefahren ist, d.h., wenn der Schwerpunkt des Hubgerüstes relativ weit oben liegt, was insbesondere dann der Fall ist, wenn die entsprechend angehobene Lasttragvorrichtung 36 eine Last mit großem Gewicht trägt. Wie oben schon dargelegt, sind derartige Hubgerüstquerschwingungen insbesondere bei Betrieb des Flurförderzeugs im Schmalgang eines Hochregallagers hinderlich, da die Gefahr von Kollisionen des seitlich ausschwingenden Hubgerüstes 8 mit Regalen beiderseits des Schmalgangs besteht.

Auf die Mittel zur Unterdrückung bzw. Reduzierung von Schwingungen wird im Folgenden näher eingegangen.

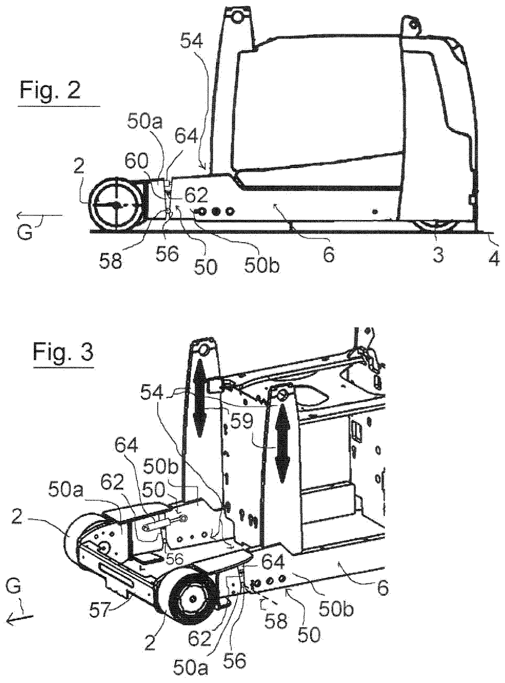

Figur 2 zeigt das Grundfahrzeug, d.h. das Flurförderzeug aus Figur 1 ohne Hubgerüst und daran angeordneter Komponenten, und Figur 3 zeigt das Chassis 6 des Flurförderzeugs mit weiteren Rahmenteilen. Figur 3 lässt erkennen, dass das Chassis 6 einen linken Radarm und einen rechten Radarm aufweist, die jeweils mit 50 gekennzeichnet sind, wobei die Radarme 50, 50 im Wesentlichen parallel zueinander von einem Hubgerüststützbereich 54 des Chassis 6 nach vorn abstehen und an ihrem vorderen Ende jeweils ein Vorderrad 2 aufweisen.

Der Hubgerüststützbereich 54 ist der Bereich des Chassis 6, in dem das Hubgerüst 8 im hinteren Bereich der Radarme 50, 50 auf dem Chassis 6 abgestützt ist.

Jeder der beiden Radarme 50, 50 weist eine Teilung in einen vorderen Radarmabschnitt 50a und einen hinteren Radarmabschnitt 50b auf, die in dem Ausführungsbeispiel gemäß den Figuren 1 bis 4 mittels einer in den Figuren nur schematisch angedeuteten Lageranordnung 56 mit einem Drehlager in der Weise gelagert sind, dass sie relativ zueinander um eine Schwenkachse 58 schwenkbeweglich sind, wobei die Schwenkachse 58 normalerweise horizontal und quer zur Hauptfahrtrichtung G des Flurförderzeugs 1 verläuft. Bei den Radarmen 50, 50 und deren Radarmabschnitten 50a, 50b handelt es sich um hochkant angeordnete Rahmenblechteile wobei die Lageranordnung 56 mit ihrem Drehlager die Radarmabschnitte 50a, 50b an der Trennstelle zwischen dem vorderen Radarmabschnitt 50a und dem hinteren Radarmabschnitt 50b im unteren Bereich miteinander verbindet. An der jeweiligen Trennstelle zwischen dem vorderen Radarmabschnitt 50a und dem hinteren Radarmabschnitt 50b ist so viel Schwenkbewegungsspiel 60 vorgesehen, dass die Radarmabschnitte 50a, 50b bei Auftreten von Stößen aufgrund von Fahrbahnunebenheiten von den Vorderrädern her oder/und bei Auftreten von irgendwie ausgelösten Schwingungen des Hubgerüstes 8 Schwenkbewegungen um die Schwenkachse 58 in einem definierten Schwenkbereich ausführen können.

Dieses Schwenkbewegungsspiel 60 dient dazu, zu verhindern, dass Stöße und schnelle, spontane Vertikalbewegungen der Vorderräder 2, 2 bei Fahrt auf unebenem Fahrbahnboden 4 ungehindert auf das Chassis 6 und damit auf das Hubgerüst 8 übertragen werden. In diesem Sinne kann die Anregung von Fahrzeugschwingungen, insbesondere Hubgerüstschwingungen bereits ursächlich in einem nennenswerten Maße wirksam unterbunden werden.

Kommt es dennoch zu Hubgerüstschwingungen, etwa beim seitlichen Ein- oder Ausstapeln von Lasten in großer Höhe, so ist der Schwenkbewegungsfreiheitsgrad der Radarmabschnitte 50, 50 in Verbindung mit den Mitteln zur Unterdrückung bzw. Reduzierung von Schwingungen insbesondere auch in der Weise nützlich, dass Querneigungstendenzen des Hubgerüstes 8 mit vertikalen Kraftkomponenten (in Figur 3 durch Pfeile 59 symbolisiert) insbesondere bei Hubgerüstquerschwingungen und die dabei auftretenden momentanen Gewichtsverlagerungen (d.h. wechselnd ungleiche Belastungen des linken Radarmes 50 und des rechten Radarmes 50) durch die Schwenkbewegungen der Radarmabschnitte 50a, 50b aufgenommen werden können, um Bewegungsenergie der Schwingung unter Einsatz der Mittel zur Unterdrückung bzw. Reduzierung von Schwingungen abzubauen.

Insbesondere in den Figuren 2 bis 4 sind als Mittel zur Unterdrückung bzw. Reduzierung von Schwingungen schematisch dargestellte Komponenten einer passiven Reibungsdämpfungsanordnung eines Dämpfungssystems zu erkennen. Dabei handelt es sich um eine jeweilige zwischen den Radarmabschnitten 50a, 50b wirksame Federanordnung 62 (hier schematisch als Schraubenfeder dargestellt) und einen hydraulischen Reibungsdämpfungszylinder 64.

Die Federanordnung ist insbesondere dazu eingerichtet, einer Auslenkung der Radarmabschnitte 50a, 50b aus ihrer gezeigten Soll-Nullstellung heraus mit elastischer Rückstelltendenz entgegenzuwirken.

Der Reibungsdämpfungszylinder 64 hat zwei durch einen axial darin verschiebbaren Kolben separierte Zylinderkammern, die über eine hydraulische Drosselstelle kurzgeschlossen sind (nicht gezeigt). Auf diese Weise wird einer Bewegung des Kolbens ein Widerstand durch das unter Druck durch die Drosselstelle strömende Hydraulikfluid entgegengesetzt.

Da der Reibungsdämpfungszylinder 64 die beiden Radarmabschnitte 50a, 50b über deren Trennstelle hinweg miteinander verbindet, kommt es bei Schwenkbewegungen der Radarmabschnitte 50a, 50b um die Schwenkachse 58 zu Streck- bzw. Stauchbewegungen des Reibungsdämpfungszylinders 64 unter Verschiebung des Kolbens, wodurch eine Bremswirkung der Schwenkbewegungen erzeugt wird. Das dabei die Drosselstelle unter Druck durchströmende Hydraulikfluid wird dabei erhitzt, so dass Bewegungsenergie in Wärme umgewandelt wird. Auf diese Weise erfolgt eine Reduzierung bzw. Dämpfung der Schwingungen.

Ein solcher Reibungsdämpfungszylinder 64 kann ferner z.B. mit einer hydropneumatischen Federspeicheranordnung kombiniert sein, welche einer Auslenkung des Kolbens des Reibungsdämpfungszylinders 64 aus einer Soll-Nulllage heraus mit elastischer Tendenz entgegenwirkt.

Es sei darauf hingewiesen, dass gemäß Varianten der Erfindung die Steifigkeit der Federanordnung 62 des Dämpfungssystems oder/und die Reibungswirkung der Reibungsdämpfungsanordnung 64 von bestimmten Betriebsparametern oder Betriebsbedingungen des Flurförderzeugs 1 abhängig steuerbar sein können, um die Schwingungsdämpfungswirkung bedarfsweise zu modulieren. Dies ist gilt auch für weitere Ausführungsbeispiele.

In einer Abwandlung des Ausführungsbeispiels gemäß den Figuren 1 bis 4 könnte der Reibungsdämpfungszylinder 64 als aktiv hydraulisch betätigbarer Hydraulikzylinder ausgebildet bzw. betreibbar sein oder ggf. durch einen solchen ergänzt sein. In diesem Fall wäre der aktiv hydraulisch betätigbare Hydraulikzylinder ein aktives Stellglied der Mittel zur Reduzierung von Schwingungen, welches so anzusteuern wäre, dass es die Bewegungen der Radarmabschnitte 50a, 50b eines Radarmes 50 relativ zueinander in einer Hubgerüstschwingungen reduzierenden Weise aktiv beeinflussen würde. Ein solches Stellglied kann im Rahmen der Erfindung auch dazu vorgesehen sein, darauf hinzuwirken, dass relativ zueinander aus einer gemeinsamen Soll-Nullstellung heraus ausgelenkte Radarmabschnitte 50a, 50b eines Radarmes 50 zu ihrer Soll-Nullstellung zurückgeführt werden.

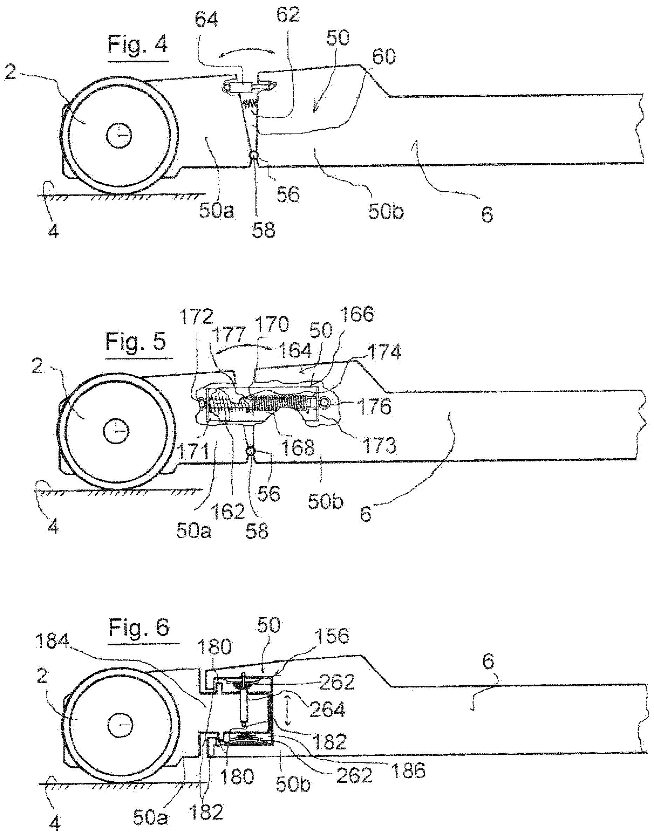

Figur 5 zeigt in einer teilweise ausgebrochen dargestellten Weise eine gegenüber den Mitteln zur Unterdrückung bzw. Reduzierung von Schwingungen gemäß Figur 4 abgeänderte Variante solcher Mittel. Dabei handelt es sich um eine steuerbare aktive Elektromagnetanordnung 164 mit einer Rückstellfederanordnung 162. Die Elektromagnetanordnung 164 umfasst in einem teilweise ausgebrochen gezeichneten Teleskopgehäuse 166 eine elektromagnetische Spule 168, die axial von einem stabförmigen ferromagnetischen Kern 170 durchsetzt ist, der bei Stromfluss durch die Spule 168 eine Kraft zur Bewegung in axialer Richtung erfährt.

Der Kern 170 ist an seinem in Figur 5 rechten axialen Ende frei, wohingegen er mit seinem in Figur 5 linken axialen Ende an einem an dem vorderen Radarmabschnitt 50a über ein Gelenk 172 festgehaltenen ersten Teil 171 des Teleskopgehäuses 166 fixiert ist. Ein den Kern 170 axial bewegbar lagerndes Element 174 ist mit einem relativ zu dem ersten Teil 171 verschiebbaren zweiten Teil 173 des Teleskopgehäuses 166 verbunden, wobei dieser zweite Teil 173 des Teleskopgehäuses 166 über ein Gelenk 176 mit dem hinteren Radarmabschnitt 50b verbunden ist. Der ferromagnetische Kern 170 ist in Bezug auf die Spule 168 axial dezentriert gehalten, so dass er bei entsprechendem Stromfluss durch die Spule 168 elektromagnetisch bewegt wird. Der Kern 170 durchsetzt axial auch die als Schraubenfeder ausgebildete Federanordnung 162, wobei diese mit ihren axialen Enden einerseits an dem ersten Teil 171 des Teleskopgehäuses 166 und andererseits an einem Kragen 177 des mit dem zweiten Teil 173 des Teleskopgehäuses 166 fest verbundenen Lagerelementes 174 abgestützt ist, so dass die Federanordnung 162 eine Federspannung auf die beiden Teile 171,173 des Teleskopgehäuses 166 und somit über die Gelenke 172,176 auch auf die beiden Radarmabschnitte 50a, 50b ausübt, wenn der Spulenkern 170 aus einer in Figur 5 dargestellten Soll-Nullstellung heraus weiter in die Spule 168 hineingezogen bzw. weiter daraus herausgezogen wird. Der Stromdurchfluss durch die Spule 168 ist mittels einer (nicht gezeigten) Steuereinrichtung steuerbar, um eine Schwenkbewegung der beiden Radarmabschnitte 50a, 50b in einer Hubgerüstschwingungen unterdrückenden bzw. reduzierenden Weise zu beeinflussen. Je nach Ausführungsform der Erfindung kann der Stromdurchfluss durch die Spule 168 sowohl hinsichtlich der Stromstärke als auch hinsichtlich der elektrischen Polarität steuerbar sein.

Anstelle oder zusätzlich zu einer Elektromagnetanordnung 164 können als Stellmittel in einer Abwandlung des Ausführungsbeispiels nach Figur 5 z.B. auch hydraulische Zylinder oder Elektromotoren in Frage kommen.

Figur 6 zeigt eine gegenüber den Mitteln zur Unterdrückung bzw. Reduzierung von Schwingungen gemäß Figur 4 und Figur 5 abgeänderte Variante solcher Mittel. Ferner ist bei der Ausführungsform gemäß Figur 6 auch die Lageranordnung 156 zur beweglichen Lagerung der Radarmabschnitte 50a, 50b anders gestaltet als die Lageranordnung 56 der bereits beschriebenen Ausführungsbeispiele.

Bei der Lageranordnung 156 gemäß Figur 6 handelt es sich um ein Linearlager mit hauptsächlichem vertikalen Bewegungsfreiheitsgrad. Das Linearlager 156 ermöglicht eine vertikale Bewegung der Radarmabschnitte 50a, 50b relativ zueinander, um Schwingungsbewegungen aufzunehmen und unter Einsatz der Mittel zur Unterdrückung bzw. Reduzierung von Schwingungen abzubauen. In dem schematisch und vereinfacht dargestellten Beispielsfall der Figur 6 ist das Linearlager 156 ein Gleitlager mit Gleitflächen 180 des Radarmabschnittes 50a und mit Gleitflächen 182 des Radarmabschnittes 50b.

Es ist bei dem Linearlager 156 vorzugsweise ein gewisses Lagerspiel vorgesehen, so dass Bewegungen der beiden Radarmabschnitte 50a, 50b relativ zueinander auch einen geringen rotativen Anteil haben können.

Der vordere Radarmabschnitt 50a weist einen nach hinten abstehenden Bereich 184 auf, der in einem vorderen Ausschnitt 186 des hinteren Radarmabschnittes 50b mit vertikalem Bewegungsspiel aufgenommen ist. Oberhalb und unterhalb des Bereichs 184 ist in dem das Bewegungsspiel bereitstellenden Freiräumen ein jeweiliges Blattfederpaket 262 als Komponente der Mittel zur Unterdrückung bzw. Reduzierung von Schwingungen vorgesehen, nämlich als Federanordnung, die einer Auslenkung der Radarmabschnitte 50a, 50b aus ihrer in Figur 6 angedeuteten Soll-Nullstellung heraus mit elastischer Rückstelltendenz entgegenwirken.

Die Radarmabschnitte 50a, 50b sind im Bereich ihrer Trennstelle durch einen Reibungsdämpfungszylinder 264 miteinander verbunden, der in dem Beispielsfall gemäß Figur 6 vertikal ausgerichtet außen an dem jeweiligen Radarm 50 angeordnet ist. Der Reibungsdämpfungszylinder 264 hat im Prinzip die gleiche Funktion wie der Reibungsdämpfungszylinder 64 in dem Ausführungsbeispiel gemäß den Figuren 1-4, nämlich eine bremsende Wirkung auf Bewegungen der Radarmabschnitte 50a, 50b relativ zueinander zu haben, um Schwingungsanregungen möglichst zu unterdrücken bzw. Schwingungsbewegungsenergie abzubauen und in Wärme umzusetzen.

Der Reibungsdämpfungszylinder 264 kann z.B. mit einer hydropneumatischen Federspeicheranordnung kombiniert sein, welche einer Auslenkung der Radarmabschnitte 50a, 50b aus ihrer relativen Soll-Nulllage heraus elastisch entgegenwirkt.

Wie auch schon in Bezug auf das Ausführungsbeispiel gemäß den Figuren 1 bis 4 dargelegt, könnte auch der Reibungsdämpfungszylinder 264 des Ausführungsbeispiels gemäß Figur 6 als aktiv hydraulisch betätigbarer Hydraulikzylinder ausgebildet bzw. betreibbar sein oder ggf. durch einen solchen ergänzt sein. In diesem Fall wäre der aktiv hydraulisch betätigbare Hydraulikzylinder ein aktives Stellglied der Mittel zur Unterdrückung bzw. Reduzierung von Schwingungen, welches so anzusteuern wäre, dass es die Bewegungen der Radarmabschnitte 50a, 50b eines jeweiligen Radarmes 50 relativ zueinander in einer Hubgerüstschwingungen unterdrückenden bzw. reduzierenden Weise aktiv beeinflussen würde. Ein solches Stellglied kann im Rahmen der Erfindung auch dazu vorgesehen sein, darauf hinzuwirken, dass relativ zueinander aus einer gemeinsamen Soll-Nullstellung heraus ausgelenkte Radarmabschnitte 50a, 50b eines Radarmes 50 zu ihrer Soll-Nullstellung zurückgeführt werden.

Die Mittel zur Unterdrückung bzw. Reduzierung von Schwingungen können bei allen Ausführungsbeispielen auch in einer blockierenden Weise deaktiviert werden, um die Radarmabschnitte 50a, 50b eines Radarmes bedarfsweise starr miteinander zu koppeln.

Ferner sei noch angemerkt, dass die gelenkige Verbindung zwischen den Reibungsdämpfungszylindern 64 bzw. 264 und den Radarmabschnitten 50a, 50b ein gewisses Ausgleichsspiel zulassen, so dass die Zylinder 64 bzw. 264 möglichst keine Biegebelastung bei Bewegungen der Radarmabschnitte 50a, 50b relativ zueinander erfahren. Dies gilt auch für die Elektromagnetanordnung 164 in Figur 5.

Im Rahmen der Erfindung kann es auch vorgesehen sein, dass die "Härte" oder "Starrheit" der Kopplung zwischen den Radarmabschnitten 50a, 50b bedarfsweise modulierbar ist. Dies kommt insbesondere bei Einsatz gesteuerter aktiver Mitte! zur Unterdrückung bzw. Reduzierung von Schwingungen in Frage.

Eine Steuereinrichtung ist in aktiven Schwingungsdämpfungssystemen nach der Erfindung vorgesehen, um die aktiven Komponenten zu steuern. Ferner sind Sensoren vorgesehen, die beispielsweise die Schwingungsamplituden des Hubgerüstes oder daran höhenbeweglich angeordneter Komponenten erfassen, wobei die Steuerungseinrichtung Daten dieser Sensoren verarbeitet, um die aktiven Komponenten im Sinne einer optimierten Schwingungsunterdrückung bzw. Schwingungsreduzierung zu steuern. In diesem Sinne können auch Sensoren vorgesehen sein, die die Relativbewegung der Radarmabschnitte 50a, 50b erfassen.

Es sei darauf hingewiesen, dass ein Flurförderzeug nach der Erfindung mehrere Mittel zur Unterdrückung bzw. Reduzierung von Schwingungen aufweisen kann, wobei diese Mittel an unterschiedlichen Stellen untergebracht sein können. Dabei kann es sich um aktive und passive Schwingungsreduzierungssysteme handeln.

## Patentansprüche

1. Flurförderzeug mit einem Chassis (6), welches über wenigstens zwei Vorderräder (2)- und über wenigstens ein Hinterrad (3) am Boden (4) abgestützt oder abstützbar ist, einem Hubgerüst (8) für eine Lasttragvorrichtung (36), welches in einem Hubgerüststützbereich (54) des Chassis (6) in aufrechter Position daran angeordnet ist, wobei die Vorderräder (2) an Radarmen (50, 50) drehbar angeordnet sind, die von dem Hubgerüststützbereich (54) des Chassis (6) nach vorne abstehen, und mit Mitteln (62, 64; 162, 164; 262, 264) zur Unterdrückung bzw. Reduzierung von Schwingungen, wobei wenigstens einer der Radarme (50, 50), vorzugsweise beide Radarme (50, 50), eine Teilung in wenigstens zwei Radarmabschnitte (50a, 50b) aufweist bzw. aufweisen, die mittels einer Lageranordnung (56; 156) in der Weise gelagert sind, dass sie Bewegungen relativ zueinander ausführen können, wobei die Mittel zur Unterdrückung bzw. Reduzierung von Schwingungen dazu eingerichtet oder betreibbar sind, Relativbewegungen der Radarmabschnitte (50a, 50b) zu beeinflussen, um zu erreichen, dass etwaige Stöße aufgrund von Fahrbahnunebenheiten während der Fahrt nur reduziert bzw. abgefedert und gedämpft über die Radarme (50, 50) an das Chassis (6) und das Hubgerüst (8) weitergegeben werden können und dass etwaige Hubgerüstschwingungen gedämpft werden, wobei jeder betreffende Radarm (50, 50) so geteilt ist, dass einer der Radarmabschnitte (50a, 50b) einen die Vorderräder (2) aufweisenden, dem Hubgerüststützbereich (54) ferneren und sich weiter von diesem weg erstreckenden vorderen Radarmabschnitt (50a) - und der andere Radarmabschnitt einen dem Hubgerüststützbereich (54) näheren und weniger weit davon weg erstreckenden oder diesen umfassenden hinteren Radarmabschnitt (50b) bilden,
**dadurch gekennzeichnet, dass** die Mittel (62, 64, 162, 164, 262, 264) zur Reduzierung von Schwingungen ein aktives Dämpfsystem mit einer Steuereinrichtung und Sensoren umfassen, wobei die Steuereinrichtung Daten dieser Sensoren verarbeiten kann, um aktive Komponenten im Sinne einer optimierten Schwingungsunterdrückung bzw. Schwingungsreduzierung zu steuern.

2. Flurförderzeug nach Anspruch 1, **dadurch gekennzeichnet, dass** die Mittel (62, 64; 162, 164; 262, 264) zur Reduzierung von Schwingungen ein passives Dämpfungssystem umfassen, um Bewegungen der beiden Radarmabschnitte (50a, 50b) relativ zueinander zu beeinflussen.

3. Flurförderzeug nach Anspruch 2, **dadurch gekennzeichnet, dass** das Dämpfungssystem eine Reibungsdämpfungsanordnung (64; 264) umfasst.

4. Flurförderzeug nach Anspruch 2 oder 3, **dadurch gekennzeichnet, dass** das Dämpfungssystem wenigstens einen hydraulischen oder/und pneumatischen Reibungsdämpfungszylinder (64; 264) umfasst.

5. Flurförderzeug nach Anspruch 4, **dadurch gekennzeichnet, dass** der wenigstens eine hydraulische oder/und pneumatische Reibungsdämpfungszylinder (64; 264) die beiden relativ zueinander bewegbaren Radarmabschnitte (50a, 50b) eines Radarmes (50) miteinander verbindet.

6. Flurförderzeug nach wenigstens einem der Ansprüche 2 bis 5, **dadurch gekennzeichnet, dass** das Dämpfungssystem wenigstens eine Federanordnung (62; 162; 262) umfasst.

7. Flurförderzeug nach Anspruch 6, **dadurch gekennzeichnet, dass** die Federanordnung (62; 162; 262) wenigstens eine mechanische Feder oder/und eine hydropneumatische Speicheranordnung umfasst.

8. Flurförderzeug nach wenigstens einem der Ansprüche 6 bis 7, **dadurch gekennzeichnet, dass** die Federanordnung (62; 162; 262) die beiden relativ zueinander bewegbaren Radarmabschnitte (50a, 50b) miteinander verbindet.

9. Flurförderzeug nach einem der Ansprüche 1 bis 8, **dadurch gekennzeichnet, dass** die aktiven Komponenten (164) wenigstens einen steuerbaren hydraulischen oder/und pneumatischen Zylinder oder/und wenigstens einen steuerbaren Elektromotor, vorzugsweise Servomotor, oder/und eine Elektromagnetanordnung (164) umfassen.

10. Flurförderzeug nach Anspruch 9, **dadurch gekennzeichnet, dass** die aktive Komponente (164) des Dämpfungssystems die beiden relativ zueinander bewegbaren Radarmabschnitte (50a, 50b) miteinander verbindet.

11. Flurförderzeug nach einem der vorhergehenden Ansprüche, **dadurch gekennzeichnet, dass** die Lageranordnung (56) ein Drehlager aufweist, welches eine Schwenkbewegung der beiden Radarmabschnitte (50a, 50b) relativ zueinander um eine normalerweise horizontale und quer zur Hauptfahrtrichtung (G) des Flurförderzeugs verlaufende Schwenkachse (58) ermöglicht.

12. Flurförderzeug nach einem der vorhergehenden Ansprüche, **dadurch gekennzeichnet, dass** die Lageranordnung (156) ein Linearlager umfasst, welches eine lineare Bewegung der beiden Radarmabschnitte (50a, 50b) relativ zueinander mit einer vertikalen Bewegungskomponente ermöglicht.

13. Flurförderzeug nach einem der vorhergehenden Ansprüche, **dadurch gekennzeichnet, dass** die Mittel (62, 64; 162, 164; 262, 264) zur Reduzierung von Schwingungen aktivierbar und deaktivierbar sind.

14. Flurförderzeug nach Anspruch 13, **dadurch gekennzeichnet, dass** die Mittel (62, 64; 162, 164; 262, 264) zur Reduzierung von Schwingungen in Abhängigkeit vom jeweiligen Betriebszustand des Flurförderzeugs (1) oder/und in Abhängigkeit vom Aufenthalt des Flurförderzeugs (1) in bestimmten Umgebungen, z.B. in einem Schmalgang, automatisch aktivierbar bzw. deaktivierbar sind.

## Claims

1. Industrial truck comprising a chassis (6), which is or can be supported by at least two front wheels (2) and by at least one rear wheel (3) on the ground (4), a mast (8) for a load-carrying apparatus (36), which is arranged in an upright position thereon in a mast support region (54) of the chassis (6), the front wheels (2) being rotatably arranged on wheel arms (50, 50) which protrude forwards from the mast support region (54) of the chassis (6), and means (62, 64; 162, 164; 262, 264) for suppressing and reducing vibrations, wherein at least one of the wheel arms (50, 50), preferably both wheel arms (50, 50) is or are split into at least two wheel arm portions (50a, 50b), which are mounted by means of a bearing arrangement (56; 156) in such a manner that they can perform movements relative to one another, the means for suppressing and reducing vibrations being designed or operable to influence relative movements of the wheel arm portions (50a, 50b), in order in ensure that any impacts owing to unevenness of the ground during travel can only be passed on to the chassis (6) and the mast (8) by means of the wheel arms (50, 50) in a reduced or absorbed and damped manner, and that any mast vibrations are damped, wherein each wheel arm (50, 50) in question is split such that one of the wheel arm portions (50a, 50b) forms a front wheel arm portion (50a), which comprises the front wheels (2) and is further away from the mast support region (54) - and the other wheel arm portion forms a rear wheel arm portion (50b) which is closer to the mast support region (54) or comprises said region,
**characterised in that** the means (62, 64; 162, 164; 262, 264) for suppressing and reducing vibrations comprise an active damping system with a control device and sensors, wherein it is possible for the control device to process data from said sensors in order to control the active components in the sense of optimised vibration suppression and vibration reduction.

2. Industrial truck according to claim 1, **characterised in that** the means (62, 64; 162, 164; 262, 264) for reducing vibrations comprise a passive damping system in order to influence movements of the two wheel arm portions (50a, 50b) relative to one another.

3. Industrial truck according to claim 2, **characterised in that** the damping system comprises a friction-damping arrangement (64; 264).

4. Industrial truck according to either claim 2 or claim 3, **characterised in that** the damping system comprises at least one hydraulic and/or pneumatic friction-damping cylinder (64; 264).

5. Industrial truck according to claim 4, **characterised in that** the at least one hydraulic and/or pneumatic friction-damping cylinder (64; 264) interconnects the two wheel arm portions (50a, 50b) of a wheel arm (50) that can move relative to one another.

6. Industrial truck according to at least one of claims 2 to 5, **characterised in that** the damping system comprises at least one spring arrangement (62; 162; 262).

7. Industrial truck according to claim 6, **characterised in that** the spring arrangement (62; 162; 262) comprises at least one mechanical spring and/or one hydropneumatic spring arrangement.

8. Industrial truck according to at least one of claims 6 to 7, **characterised in that** the spring arrangement (62; 162; 262) interconnects the two wheel arm portions (50a, 50b) which can move relative to one another.

9. Industrial truck according to any of claims 1 to 8, **characterised in that** active components (164) comprise at least one controllable hydraulic and/or pneumatic cylinder, and/or at least one controllable electric motor, preferably a servomotor, and/or an electromagnetic arrangement (164).

10. Industrial truck according to claim 9, **characterised in that** the active component (164) of the damping system interconnects the two wheel arm portions (50a, 50b), that can move relative to one another.

11. Industrial truck according to any of the preceding claims, **characterised in that** the bearing arrangement (56) has a pivot bearing, which allows for a pivot movement of the two wheel arm portions (50a, 50b) relative to one another about a normally horizontal pivot axis (58), which extends transversely to the main direction of travel (G) of the industrial truck.

12. Industrial truck according to any of the preceding claims, **characterised in that** the bearing arrangement (156) comprises a linear bearing, which allows for a linear movement of the two wheel arm portions (50a, 50b) relative to one another having a vertical movement component.

13. Industrial truck according to any of the preceding claims, **characterised in that** the means (62, 64; 162, 164; 262, 264) for reducing vibrations are activatable and deactivatable.

14. Industrial truck according to claim 13, **characterised in that** the means (62, 64; 162, 164; 262, 264) for reducing vibrations are automatically activatable and deactivatable depending on the particular operating state of the industrial truck (1) and/or depending on the industrial truck (1) being stopped in certain surroundings, for example in a narrow aisle.

## Revendications

1. Chariot de manutention avec un châssis (6), qui s'appuie ou peut s'appuyer sur le sol (4) par au moins deux roues avant (2) et par au moins une roue arrière (3), un mât (8) pour un dispositif de support de charge (36), qui est disposé dans une zone de support de mât (54) du châssis (6) en position verticale sur celui-ci, dans lequel les roues avant (2) sont disposées de manière rotative sur des bras de roue (50, 50) qui font saillie vers l'avant depuis la zone de support de mât (54) du châssis (6), et avec des moyens (62, 64 ; 162, 164 ; 262, 264) pour supprimer ou pour réduire des vibrations, dans lequel au moins l'un des bras de roue (50, 50), de préférence les deux bras de roue (50, 50), présentent une division en au moins deux sections de bras de roue (50a, 50b) qui sont supportées au moyen d'un agencement de palier (56 ; 156) de telle sorte qu'elles peuvent effectuer des mouvements l'une par rapport à l'autre, dans lequel les moyens de suppression ou de réduction des vibrations sont conçus ou peuvent être utilisés pour influencer les mouvements relatifs des sections de bras de roue (50a, 50b), afin d'obtenir que les chocs éventuels dus aux inégalités de la chaussée pendant la conduite ne soient propagés que réduits ou atténués et amortis par les bras de roue (50, 50) au châssis (6) et au mât (8) et que les vibrations éventuelles du mât sont amorties, dans lequel chaque bras de roue (50, 50) concerné est divisé de telle sorte que l'une des sections de bras de roue (50a, 50b) comporte une section de bras de roue avant (50a) comprenant les roues avant (2), s'étendant plus loin et plus éloignée de la zone de support du mât (54) - et l'autre section de bras de roue forme une section de bras de roue arrière (50b) s'étendant plus près et moins loin de la zone de support du mât (54) ou comprenant celle-ci,
**caractérisé en ce que** les moyens (62, 64, 162, 164, 262, 264) de réduction des vibrations comprennent un système d'amortissement actif avec un dispositif de commande et des capteurs, dans lequel le dispositif de commande peut traiter des données de ces capteurs pour commander des composants actifs dans le sens d'une suppression ou d'une réduction optimisée des vibrations.

2. Chariot de manutention selon la revendication 1, **caractérisé en ce que** les moyens (62, 64 ; 162, 164 ; 262, 264) de réduction des vibrations comprennent un système d'amortissement passif pour influencer les mouvements des deux sections de bras de roue (50a, 50b) l'une par rapport à l'autre.

3. Chariot de manutention selon la revendication 2, **caractérisé en ce que** le système d'amortissement comprend un ensemble d'amortissement par friction (64 ; 264).

4. Chariot de manutention selon la revendication 2 ou 3, **caractérisé en ce que** le système d'amortissement comprend au moins un vérin d'amortissement par friction (64 ; 264) hydraulique ou/et pneumatique.

5. Chariot de manutention selon la revendication 4, **caractérisé en ce que** ledit au moins un vérin hydraulique ou/et pneumatique d'amortissement par friction (64 ; 264) relie entre elles les deux sections de bras de roue (50a, 50b) d'un bras de roue (50) mobiles l'une par rapport à l'autre.

6. Chariot de manutention selon au moins l'une des revendications 2 à 5, **caractérisé en ce que** le système d'amortissement comprend au moins un agencement de ressorts (62 ; 162 ; 262).

7. Chariot de manutention selon la revendication 6, **caractérisé en ce que** l'agencement de ressorts (62 ; 162 ; 262) comprend au moins un ressort mécanique ou/et un agencement d'accumulation hydropneumatique.

8. Chariot de manutention selon au moins l'une des revendications 6 à 7, **caractérisé en ce que** l'agencement de ressorts (62 ; 162 ; 262) relie les deux sections de bras de roue (50a, 50b) mobiles l'une par rapport à l'autre.

9. Chariot de manutention selon l'une des revendications 1 à 8, **caractérisé en ce que** les composants actifs (164) comprennent au moins un vérin hydraulique ou/et pneumatique commandable ou/et au moins un moteur électrique commandable, de préférence un servomoteur, ou/et un ensemble d'électroaimants (164).

10. Chariot de manutention selon la revendication 9, **caractérisé en ce que** le composant actif (164) du système d'amortissement relie entre eux les deux sections de bras de roue (50a, 50b) mobiles l'un par rapport à l'autre.

11. Chariot de manutention selon l'une des revendications précédentes, **caractérisé en ce que** l'agencement de palier (56) comporte un palier de pivotement permettant un mouvement de pivotement des deux sections de bras de roue (50a, 50b) l'une par rapport à l'autre autour d'un axe de pivotement (58) normalement horizontal et transversal à la direction principale de déplacement (G) du chariot de manutention.

12. Chariot de manutention selon l'une des revendications précédentes, **caractérisé en ce que** l'agencement de palier (156) comprend un palier linéaire permettant un déplacement linéaire des deux sections de bras de roue (50a, 50b) l'une par rapport à l'autre avec une composante de déplacement verticale.

13. Chariot de manutention selon l'une des revendications précédentes, **caractérisé en ce que** les moyens (62, 64 ; 162, 164 ; 262, 264) de réduction des vibrations peuvent être activés et désactivés.

14. Chariot de manutention selon la revendication 13, **caractérisé en ce que** les moyens (62, 64 ; 162, 164 ; 262, 264) de réduction des vibrations peuvent être activés ou désactivés automatiquement en fonction de l'état de fonctionnement respectif du chariot de manutention (1) ou/et en fonction du séjour du chariot de manutention (1) dans certains environnements, par exemple dans une allée étroite.
